Europäisches Patentamt

European Patent Office

Office européen des brevets

(11) Publication number: **0 222 719**
A1

(12) # EUROPEAN PATENT APPLICATION

(21) Application number: **86850359.0**

(22) Date of filing: **21.10.86**

(51) Int. Cl.⁴: **F 16 L 59/16**
**F 16 L 39/00**

(30) Priority: **21.10.85 SE 8504955**

(43) Date of publication of application:
**20.05.87 Bulletin 87/21**

(84) Designated Contracting States:
**AT BE CH DE FR GB IT LI NL SE**

(71) Applicant: **Forsheda AB**
**S-330 12 Forsheda (SE)**

(72) Inventor: **Petersson, Stefan**
**Nygatan 15**
**S-330 12 Forsheda (SE)**

**Orderell, Erik**
**Platmyntsgatan 11**
**S-414 79 Goteborg (SE)**

(74) Representative: **Linde, Leif**
**Vernamo Patentbyrä AB P.O. Box 1**
**S-270 11 Abbekas (SE)**

(54) A connection device for sealingly connecting tubular elements.

(57) A device for connecting tubular elements (2), especially tubular casing elements of pipe-lines, is constituted by a sleeve (12), consisting of two end units (14) and an intermediate element (16). The end units (14) are adapted to be connected with the outer surface of either of two tubular elements which are to be connected with each other. Preferably the intermediate element (16) comprises a heat-insulating material (30). Each end unit (14) comprises an outer casing having a space which is open towards the adjacent tubular element. In this space there is positioned a sealing collar (20) which is sealingly compressible against the outer surface of the adjacent tubular element.

Fig. 1.

**Description**

The present invention relates to a connection device for sealingly connecting tubular elements, especially for sealingly connecting the tubular casing elements of a heat insulated hot water pipe-line.

Hot water pipe-lines comprise an inner metal pipe and an outer casing which usually consists of polyethylene. Between the inner pipe and the outer casing there is positioned a heat-insulating material, usually foamed polyurethane. The hot water pipe-lines consist of sections which are connected with each other by welding the inner pipes together. In order to make the inner pipes accessible for such welding the pipe-lines do not have any tubular casing and heat-insulating material within the jointing areas of the inner pipes. Subsequently to the welding of the inner pipes it is necessary to insulate and seal the jointing areas by sealingly connecting the tubular casing elements of adjacent sections with each other. The connection device according to the invention is a primarily intended for providing said connection of the casing elements of hot water pipe-lines but can also be used for connecting sections of other types of pipe-lines or culverts with each other.

According to the invention the connection device comprises a sleeve having two end units adapted to be sealingly connected with either of two tubular elements which are to be connected with each other and an intermediate element firmly connected with the end units and preferably comprising a heat-insulating material.

Each end unit comprises a casing enclosing a space which is open towards the tubular element to which the end unit is adapted to be connected, a sealing collar consisting of elestomeric material being positioned in said space. Said sealing collar comprises a sealing portion projecting from said space trough the casing of the end unit. The sealing portion of the sealing collar is adapted to be pressed against the outer surface of the tubular element by means of a suitable compression device, e. g. of the hose clamp type, which is operable from outside the casing of the end unit e. g. by forming the casing of the end units with closable openings for a wrench or a screw driver.

When closing the connection device according to the invention for closing the joint areas of hot water pipe-lines it is a great advantage that the connection device according to the invention is dismountable. This makes it possible to mount the connection device before the inner pipe of the pipe-line are welded so that the heat-insulating material of the pipe-line is protected also before the welding, and also makes it possible to inspect the jointing areas e. g. with regard to the tightness of the welded joints after the welding.

The invention is described in the following with reference to the accompaning drawings.

Fig 1 is an axial section schematically showing a first embodiment of a connection device according to the invention.

Fig 2 is a partial sectional view of the connection device shown in Fig. 1 on an enlarged scale.

Fig 3 schematically shows a detail of the connection device according to the invention.

Fig 4 is an axial section of a modified embodiment of the connection device according to the invention.

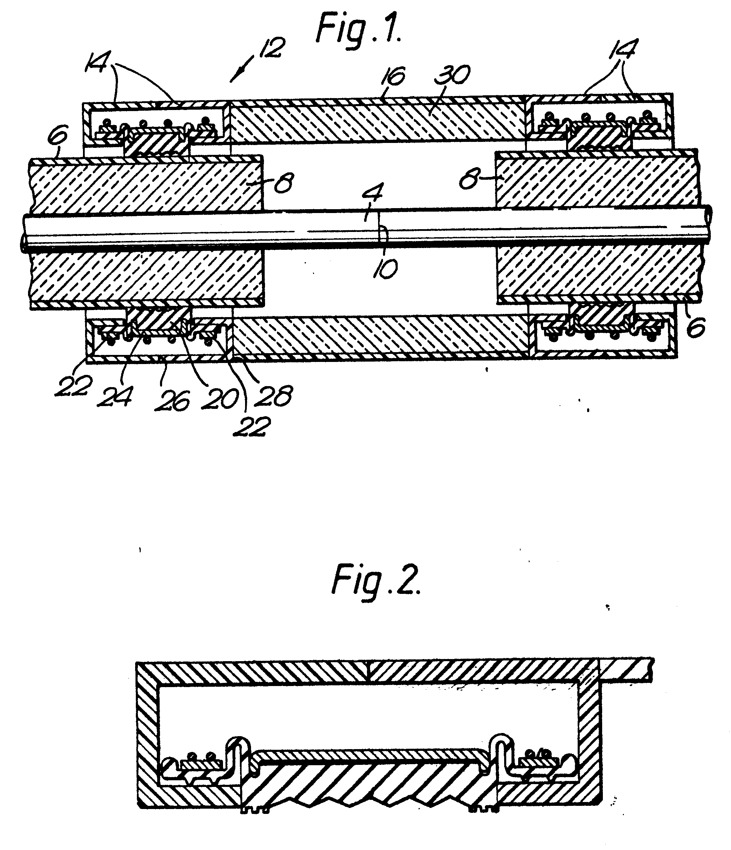

In Fig 1 reference numeral 2 designates sections of a hot water pipe-line, which are connected with each other. The hot water pipe-line consists of an inner steel pipe 4, an outer casing 6 of a plastic material and an intermediate, heat-insulating material 8 of e. g. foamed polyurethane.

The inner pipes 4 are welded together at 10, while the outer casings 6 and the heat-insulating material 8 form an interspace at the jointing area.

The interspace is closed and sealed by means of connection device 12 according to the invention. The connection device 12 consists of two end units 14 and an intermediate element 16. Each end unit 14 consists of a casing 18 and a sealing collar 20.

The sealing collar 20 is positioned in an undercut space within the casing 18 and is forced against the surface of the casing 18 and against the outer surface of the pipe-line casing 6 by means of hose clamp 22 and 24, respectively. The apperance of the casing 18, the sealing collar 20 and the clamp hoses 22 and 24 of the connection device is shown in Fig 2 on an enlarged scale.

The casing 18 of the connection device consists of two portions welded together at 26. The end units 14 are welded to the intermediate element 16 at the weld joints 28, and between the end units 14 there is at the inner side of the intermediate element 16 positioned a heat-insulating material 30, e. g. consisting of foamed polyurethane. The outer surface of the intermediate element 16 consists of a hard plastic material. Preferably, the outer surface of the intermediate element 16 as well as the casing of the end units consist of polyethylene.

The locking of the sealing portion of the sealing collar between the edges defining the openings of the casing 18 makes it possible to manufacture the sealing collar from a rubber material having low hardness (e. g. 40°) increasing the sealing effect. Due to the fact that the end units 14 consist of two portions welded together at 26 the length tolerances of the sealing collar can be taken up by adapting the axial size of the casing 18 when said portions are welded together.

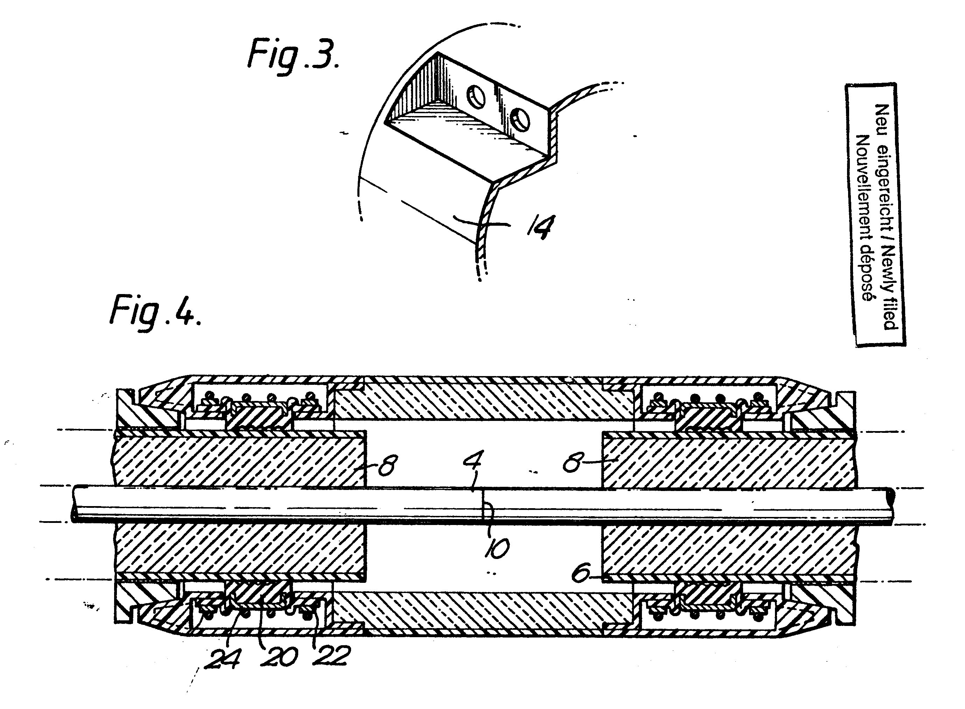

The hose clamps are accessible from outside the casing 18 by the fact that the casing is designed in accordance with Fig 3. Thus, clamping bolts or the like of the hose clamps are accessible through openings which preferably are closable.

In the embodiment of the connection device according to the invention shown i Fig 4 the connection device comprises clamping rings for securely locking the connection device to the outer surface of the casing 6 of the pipe-line for preventing that the connection devices are displaced along the hot water pipe-line by movments therein or under the influence of movments in the ground. Preferably, the clamping rings are at their inner surfaces provided with a material increasing the friction, e. g. carborundum or sand connected with said surfaces by means of an adhesive. It is also possible to provide the plastic material with an irregular surface when manufactering the clamping rings.

The locking of the connection device with regard to axial displacement is provided by means of four cooperating units, two clamping rings secured by being wedged up by means of a hammer or another tool. and two sealing collars which are tightened by means of a screw driver. The outer surface of the clamping rings is constructed so as to have a diameter which is not greater than the diameter of the adjacent surface of the end unit. Thus, gravel and sand enclosing the connection device will have any influence on the clamping ring substantially only in the respect that the ring is forced towards the connection device so as to increase the locking force by the engagement between the conical engagement surfaces of the clamping ring and the casing of the connection device.

The connection device is mounted in the following way:

1. The connection device is centered in an enclosing position in relation to the open jointing area of the hot water pipe-line.

2. The sealing collars are tightened by means of a screw driver.

3. The clamping rings which have been positioned on either side of the connection device are punched to the locking position by means of a hammer or other tool.

4. The openings of the casing of the connection device are sealed by means of rubber plugs.

5. In the mounted position the connection device is securely locked around the joint. The connection device is completely tight and metal element positioned inside the connection device, such as hose clamps and inner pipe, are completely protected from moisture and corrosion.

It is realized that the connection device according to the invention can be used also for sealingly connecting other tubular elements than the tubular casings of hot water pipe-lines with each other. It is also possible to modify the invention within the scope of the following claims.

## Claims

1. A device for connecting tubular elements (2) with each other, especially for connecting tubular casing elements of a hot water pipe-line, comprising a sleeve(12) having to end units (14) adapted to be sealingly connected with the outer surfaces of either of two tubular elements which are to be connected with each other and an intermediate element (16) firmly connected with the end units and preferably comprising a heat-insulating material (30) **characterized** in that each end unit (14) comprises an outer casing (18) having a space open towards the outer surface of the adjacent tubular element, a sealing collar (20) being positioned in said space and being sealingly compressible against the outer surface of the adjacent tubular element.

2. A device as claimed in claim 1, **characterized** in that the sealing collar (20) comprises a sealing portion sealingly compressible against a portion of an inner surface of said space and also comprising a sealing portion sealingly compressible against the outer surface of the adjacent tubular element.

3. A device as claimed in claim 2, **characterized** in that the sealing collar (20) comprises two side edge portions compressible against separate inner surface portions of the said space and comprising a central portion compressible against the outer surface of the adjacent tubular element.

4. A device as claimed in claim 3, **characterized** in that each end unit (14) comprises an outer casing (18) having a substantially C-shaped cross section, the free ends of the legs of said casing extending towards each other forming said inner surface portion against which the side edge portions of the sealing collar is compressible and forming between themselves a peripheral opening through which the central portion of the collar extends towards the outer surface of the adjacent tubular element.

5. A device as claimed in claim 4, **characterized** in that the central portion of the sealing collar (20) compressible against the outer surface of the adjacent tubular element has an axial dimension which is smaller than the axial dimension of the opening of the end unit (14), through which said portion extends.

6. A device as claimed in any of claims 2 - 5, **characterized** in that the sealing portions of the sealing collar (20) are flexibly connected with each other.

7. A device as claimed in any of the preceding claims, **characterized** in that the sealing collar (20) is sealingly compressible against the outer surface of the adjacent tubular element by means of a compression device (24) of the hose clamp type.

8. A device as claimed in any of claims 2 - 7, **characterized** in that the sealing portion of the sealing collar (20) compressible against an inner surface portion of the casing of the connection device is compressible against said inner surface portion by means of a compression device (22) of the hose clamp type.

9. A device as claimed in any of the preceding claims, **characterized** in that the intermediate element (16) comprises an outer casing consisting of a tubular element having a continuous cross section.

10. A device as claimed in any of the preceding claims, **characterized** by wedge elements adapted to be forced into the space between the outer surface of the tubular elements and opposite surface portions of the end units (14) at the outer end thereof.

Fig.1.

Fig.2.

Neu eingereicht / Newly filed
Nouvellement déposé

Fig. 3.

Fig. 4.

| | DOCUMENTS CONSIDERED TO BE RELEVANT | | EP 86850359.0 |

| Category | Citation of document with indication, where appropriate, of relevant passages | Relevant to claim | CLASSIFICATION OF THE APPLICATION (Int. Cl.4) |
|---|---|---|---|
| A | EP - A1 - 0 059 263 (G+M MONTAGE GMBH) <br><br> -- | | F 16 L 59/16 <br> F 16 L 39/00 |
| A | GB - A - 1 421 481 (BRUUN & SOREN-SEN LTD) <br><br> ---- | | |

**TECHNICAL FIELDS SEARCHED (Int. Cl.4)**

F 16 L 39/00
F 16 L 59/00

The present search report has been drawn up for all claims

| Place of search | Date of completion of the search | Examiner |
|---|---|---|
| VIENNA | 05-01-1987 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82